# EUROPEAN PATENT SPECIFICATION

(11) **EP 4 026 667 B1**
(45) Date of publication and mention of the grant of the patent: **29.10.2025**
(21) Application number: 20861840.5
(22) Date of filing: 10.07.2020
(51) Int. Cl.: B25J 13/00, B23K 9/095, B23K 9/173

(54) **WELDING MACHINE AND WELDING SYSTEM PROVIDED WITH A PLURALITY OF WELDING MACHINES**
SCHWEISSMASCHINE UND SCHWEISSSYSTEM MIT MEHREREN SCHWEISSMASCHINEN
MACHINE DE SOUDAGE ET SYSTÈME DE SOUDAGE COMPORTANT UNE PLURALITÉ DE MACHINES DE SOUDAGE

(30) Priority: 04.09.2019 JP 2019161455
(43) Date of publication of application: 13.07.2022
(73) Proprietor: Panasonic Intellectual Property Management Co., Ltd., Osaka-shi, Osaka 540-6207 (JP)
(72) Inventor: IHARA, Hideki, Osaka-shi, Osaka 540-6207 (JP); AN, Baoyu, Osaka-shi, Osaka 540-6207 (JP); KAWASHIMA, Noriyuki, Osaka-shi, Osaka 540-6207 (JP); NOGUCHI, Takahiro, Osaka-shi, Osaka 540-6207 (JP); NAGANO, Motoyasu, Osaka-shi, Osaka 540-6207 (JP)
(74) Representative: Vigand, Philippe
(86) International application number: PCT/JP2020/026984
(87) International publication number: WO 2021/044731

(56) References cited:
- JP-A- 2002 229 863
- JP-A- 2002 229 863
- JP-A- 2006 026 640
- JP-A- 2015 112 631
- JP-A- 2015 112 631

## Description

### TECHNICAL FIELD

The present invention relates to a welding machine that performs consumable electrode arc welding and a welding system including a plurality of welding machines, see claims 1 and 6.

### BACKGROUND ART

A conventionally proposed technique is for monitoring various output data during arc welding to investigate a cause of an anomaly occurring during welding.

For example, PTL 1 discloses a configuration that includes a volatile first storage unit that stores sampled data and a nonvolatile second storage unit that stores an average value of the sampled data at predetermined time intervals. In this configuration, the data stored in the first storage unit is stored in the second storage unit when an anomaly occurs, and a factor of the anomaly is analyzed.

PTL 2 discloses a configuration that includes a first data acquisition unit that samples data in a high-speed cycle, a second data acquisition unit that samples data in a low-speed cycle, and an association unit that associates time points when anomalies are detected in both the data with each other.

PTL 3 discloses a configuration that includes a plurality of data storage regions and in which data is cyclically written in a predetermined storage region when no anomaly is detected, and the storage region into which data is written is changed when an anomaly is detected.

### Citation List

### Patent Literature

PTL 1: Unexamined Japanese Patent Publication No. 2013-010119
PTL 2: Unexamined Japanese Patent Publication No. 2015-112631 (describing the preamble of claims 1 and 6)
PTL 3: Unexamined Japanese Patent Publication No. 2016-022519

### SUMMARY OF THE INVENTION

### Technical problem

In the consumable electrode arc welding, a so-called micro-short circuit occasionally occurs due to vibration or the like of a molten pool formed on a workpiece. The micro-short circuit is such that a molten region of the workpiece comes into contact with a welding wire. The micro-short circuit occurs in a very short time (less than or equal to 2 msec) during the arc period. Due to occurrence of a micro-short circuit, when an arc is quenched and then reinitiated, melted metal is explosively scattered and becomes spatter, and thus adheres to the surface of the workpiece.

Usually, welding conditions are set such that such a micro-short circuit does not occur, but spatter may occur depending on a change of a state of a workpiece or a welding wire during welding.

However, in the conventional configurations disclosed in PTLs 1 to 3, a sampling cycle of data is long, and occurrence of a micro-short circuit cannot be appropriately recognized.

The present invention has been made in view of the above points, and an object of the present invention is to provide a welding machine capable of recognizing a number of occurrences of a micro-short circuit during arc welding and estimating the occurrence state of spatter, and a welding system including the same.

### Solution to problem

In order to achieve the above object, a welding machine of the present invention is defined in claim 1, and includes at least a welding unit, a data acquisition unit, a data processor, a first storage unit, and a second storage unit. The data acquisition unit sequentially acquires a plurality of output voltage values of the welding unit at a predetermined sampling frequency. The first storage unit stores the plurality of output voltage values sequentially acquired by the data acquisition unit. The data processor calculates at least one of a number of occurrences of a micro-short circuit that occurs between the welding unit and a workpiece and an average value of the number of occurrences of the micro-short circuit, based on the plurality of output voltage values stored in the first storage unit, and stores the at least one of the calculated number of occurrences of the micro-short circuit and the average value of the number of occurrences of the micro-short circuit in the second storage unit.

A welding system of the present invention is a welding system is defined in claim 6, including at least a plurality of welding machines and a central controller connected to the plurality of welding machines. Each of the plurality of welding machines includes among other features (see claim 6) a first storage unit and a data processor. The central controller includes a second storage unit and a third storage unit.

### Advantageous effects of invention

The welding machine of the present invention makes it possible to recognize the number of occurrences of the micro-short circuit that occurs during the welding period. Further, a generation state of spatter can be estimated. The welding system of the present invention can reduce the storage units disposed in the welding machine, and can simplify the configuration of the welding machine.

### BRIEF DESCRIPTION OF DRAWINGS

FIG. 1 is a schematic diagram illustrating a configuration of an arc welding machine according to a first exemplary embodiment of the present invention.
FIG. 2 is a schematic diagram illustrating a configuration of a first storage unit and a second storage unit.
FIG. 3 is a flowchart illustrating a procedure for detecting and displaying a micro-short circuit.
FIG. 4 is an example of output waveforms of a welding voltage and a welding current.
FIG. 5A is a schematic diagram illustrating a flow of data in the first storage unit and the second storage unit in a case where a capacity of a first memory is full.
FIG. 5B is a schematic diagram illustrating a flow of data in the first storage unit and the second storage unit in a case where the capacity of a second memory is full.
FIG. 5C is a schematic diagram illustrating a flow of data in the first storage unit and the second storage unit at the end of a welding period.
FIG. 6A is an example of a message displayed on a display.
FIG. 6B is an example of a message displayed on the display.
FIG. 7 is a schematic diagram illustrating a configuration of an arc welding machine according to a first modification.
FIG. 8 is a schematic diagram illustrating a configuration of a welding system according to a second modification.

### DESCRIPTION OF EMBODIMENT

Hereinafter, an exemplary embodiment of the present invention will be described in detail with reference to the drawings. Following descriptions of a preferable exemplary embodiment are substantially examples, and are not intended to limit the present invention, and applications or uses of the present invention.

### (First exemplary embodiment)

### [Configuration of arc welding machine]

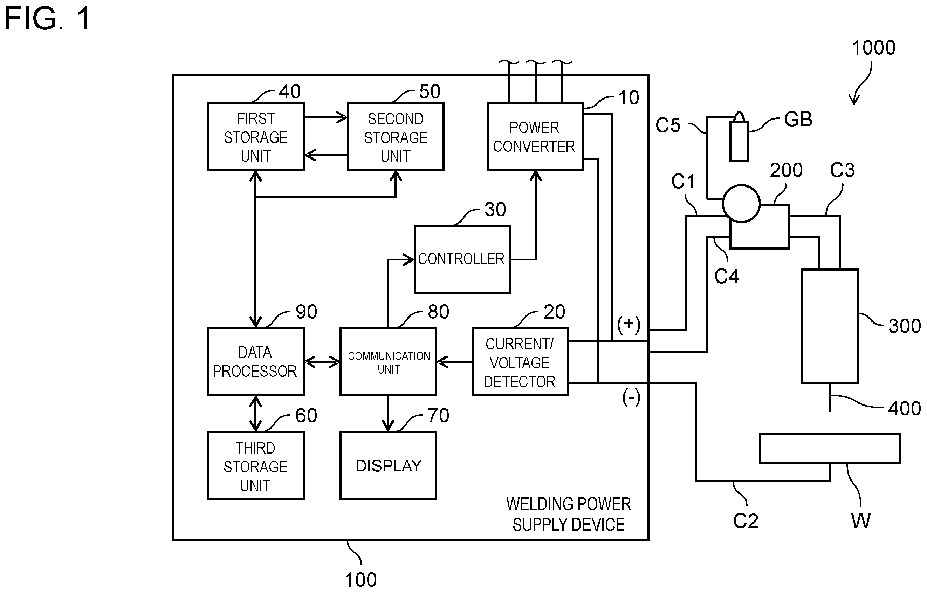

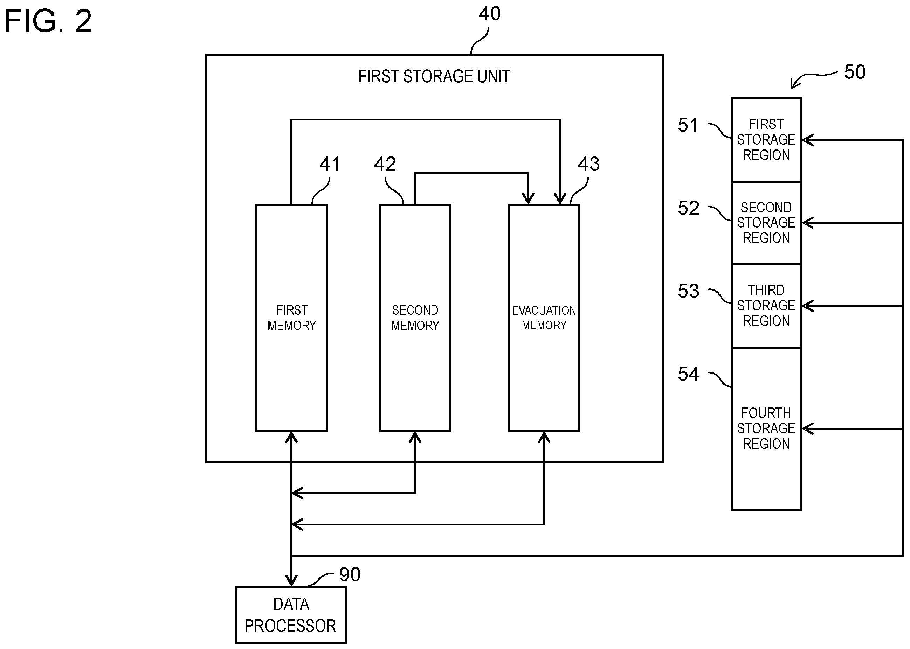

FIG. 1 is a schematic diagram illustrating a configuration of an arc welding machine according to the present exemplary embodiment. FIG. 2 is a schematic diagram illustrating a configuration of a first storage unit and a second storage unit.

As illustrated in FIG. 1, arc welding machine 1000 includes welding power supply device 100, wire feeding device 200, and welding torch (welding unit) 300.

Welding power supply device 100 includes power converter 10, current/voltage detector (data acquisition unit) 20, controller 30, first to third storage units 40 to 60, display 70, and data processor 90. Further, welding power supply device 100 includes communication unit 80. Note that although welding power supply device 100 includes other components, illustration and description thereof are omitted for convenience of description.

Power converter 10 receives power from an external power supply, not illustrated, such as a 200 V power supply, and converts the power into a welding voltage and a welding current to be supplied to welding wire 400.

Current/voltage detector 20 sequentially detects a plurality of output current values of the welding current at a predetermined sampling frequency. Current/voltage detector 20 further sequentially detects a plurality of output voltage values of the welding voltage at a predetermined sampling frequency.

Controller 30 transmits a control signal to power converter 10 in accordance with a predetermined program, and controls a welding current waveform and a welding voltage waveform output from power converter 10 to welding wire 400.

As illustrated in FIG. 2, first storage unit 40 includes first memory (first temporary storage unit) 41, second memory (second temporary storage unit) 42, and evacuation memory (third temporary storage unit) 43. First memory 41, second memory 42, and evacuation memory 43 are all constituted by a random access memory (RAM) or a flash memory. In the present exemplary embodiment, first memory 41 and second memory 42 are set to have the same data capacity. The capacity of evacuation memory 43 is set to be larger than or equal to the capacities of first and second memories 41, 42.

As described later, first memory 41 and second memory 42 store a plurality of output voltage values of the welding voltage sequentially detected by current/voltage detector 20. When a data volume of the plurality of stored output voltage values reaches the capacity of either first memory 41 or second memory 42, data processor 90 copies the plurality of output voltage values to evacuation memory 43. Note that when the output voltage values are copied to evacuation memory 43, the output voltage values are copied after all previous output voltage values are deleted. Alternatively, next output voltage values are saved over the previous output voltage values.

Second storage unit 50 is constituted by a nonvolatile memory, such as a flash memory or a magnetic hard disk. As illustrated in FIG. 2, second storage unit 50 is divided into a plurality of storage regions. A number of occurrences of a micro-short circuit and an average value of the number of occurrences of the micro-short circuit that are calculated by data processor 90 are stored in different storage regions. Further, a welding time in one welding period (hereinafter, simply referred to as a welding time) is also stored in a storage region of second storage unit 50 different from the regions where the number of occurrences of the micro-short circuit and the average value of the number of occurrences of the micro-short circuit are stored. The data storage in second storage unit 50 will be described later in detail.

Third storage unit 60 stores a plurality of pieces of fixed character string data. Data processor 90 reads the character string data from third storage unit 60 in accordance with the number of occurrences of the micro-short circuit and the average value of the number of occurrences of the micro-short circuit, and displays the read character string data on display 70. Note that data processor 90 may incorporate the number of occurrences of the micro-short circuit and the average value of the number of occurrences of the micro-short circuit into the character string data and display the character string data on display 70.

Display 70 displays the character string data read from third storage unit 60. In addition, other data may be displayed. For example, the set welding current and welding voltage and the actually detected welding current and welding voltage may be displayed chronologically. Further, when display 70 is a touch panel, it may also serve as an input unit that inputs data to welding power supply device 100.

Communication unit 80 performs data communication between current/voltage detector 20 and data processor 90. Further, communication unit 80 performs data communication between controller 30 and power converter 10. In addition, communication unit 80 performs data communication between data processor 90 and display 70.

Data processor 90 stores the plurality of output current values and the plurality of output voltage values sequentially detected by current/voltage detector 20 in first storage unit 40. Data processor 90 further calculates the number of occurrences of the micro-short circuit based on the plurality of output voltage values stored in first storage unit 40, and stores the calculated number of occurrences in second storage unit 50. Further, data processor 90 calculates the number of occurrences of the micro-short circuit per unit time in one welding period (hereinafter, referred to as an average value of the number of occurrences), and stores the average value of the calculated number of occurrences in second storage unit 50.

Data processor 90 includes, for example, a central processing unit (CPU). Data processor 90 executes predetermined software on the CPU to store and read data in and from first to third storage units 40 to 60. Further, data processor 90 executes software to calculate various data.

Wire feeding device 200 feeds welding wire 400 housed in torch cable C3 toward workpiece W via power cable C1 connected to welding power supply device 100. At this time, power is supplied to welding wire 400 at a torch distal end portion (not illustrated). Note that a command related to a feeding amount, a feeding speed, and a feeding direction of welding wire 400 is input from controller 30 to wire feeding device 200 through a control line, not illustrated, in control cable C4. Wire feeding device 200 is driven based on the command.

Welding torch 300 is connected to torch cable C3 and internally holds welding wire 400 so as to be able to feed welding wire 400. Further, a shielding gas is supplied from gas cylinder GB via gas hose C5 and torch cable C3.

When arc welding is performed, base material cable C2 is connected to a negative terminal of welding power supply device 100, and power cable C1 is connected to a positive terminal. Base material cable C2 is connected to workpiece W. A welding voltage and a welding current are output from welding power supply device 100 to welding wire 400 in accordance with a predetermined program. An arc, not illustrated, is then generated between the tip of welding wire 400 and workpiece W, and welding is performed.

### [Procedure for detecting and displaying micro-short circuit]

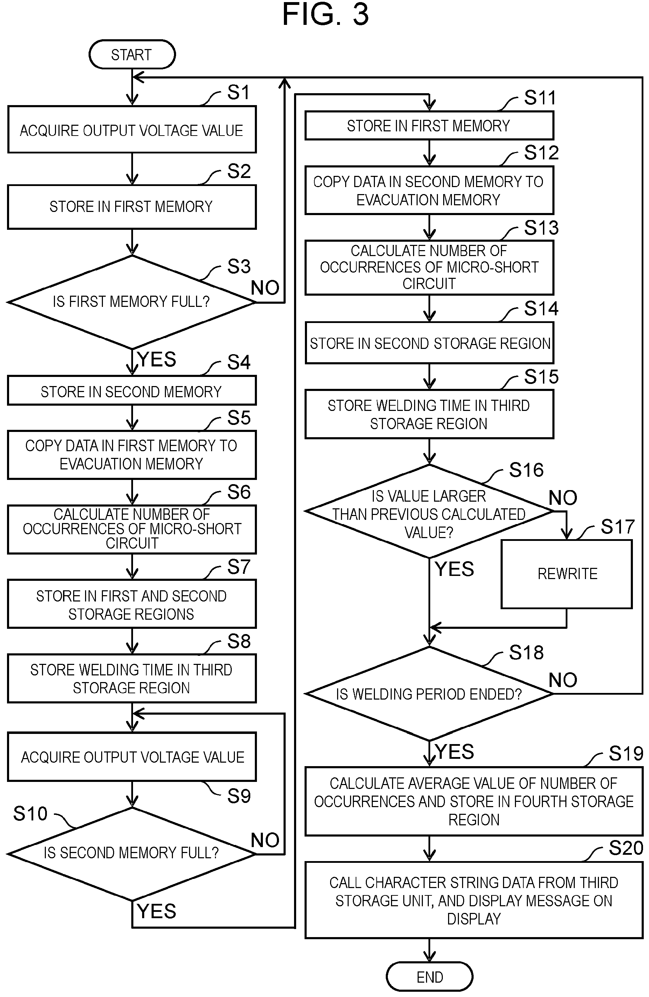

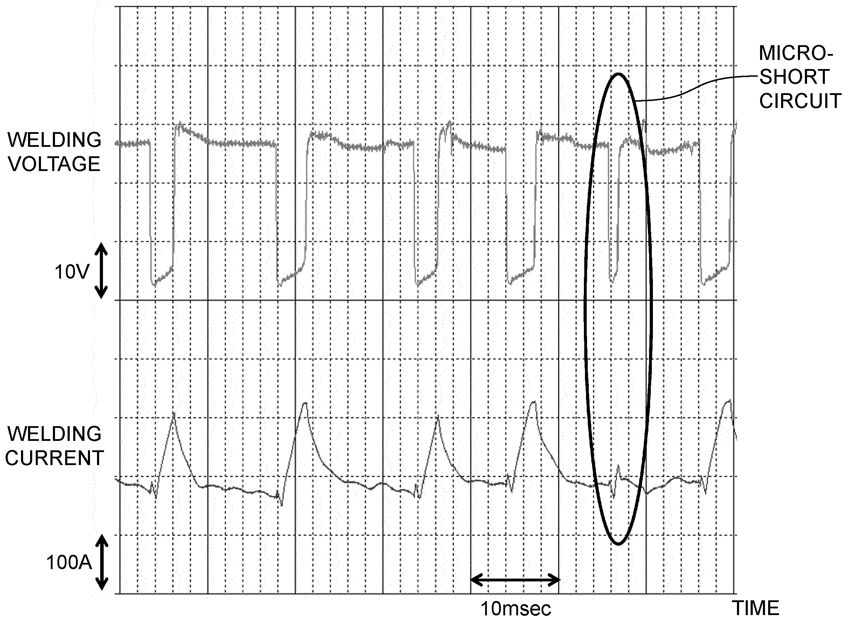

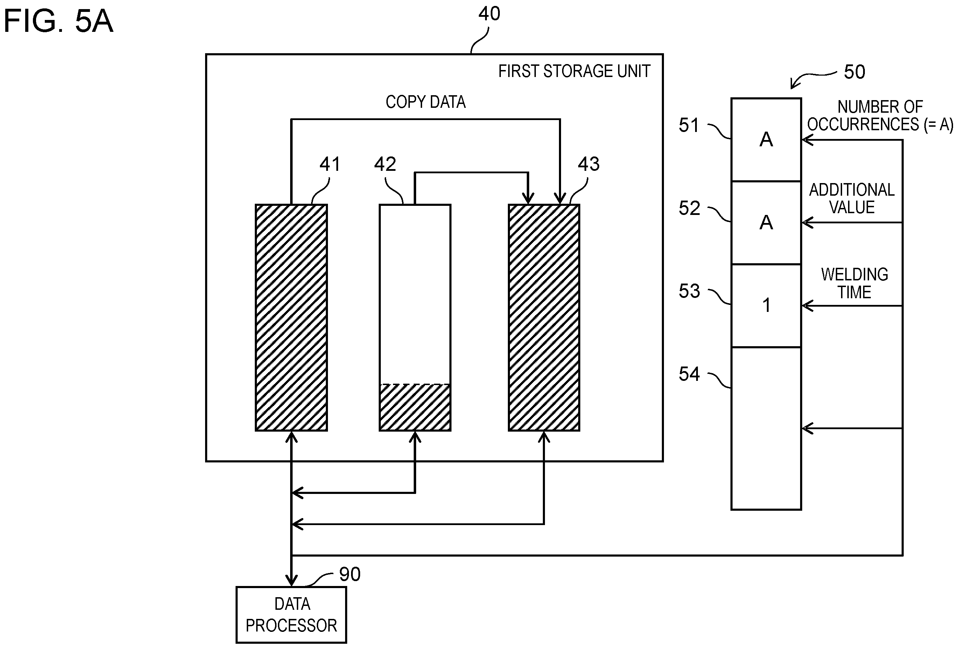

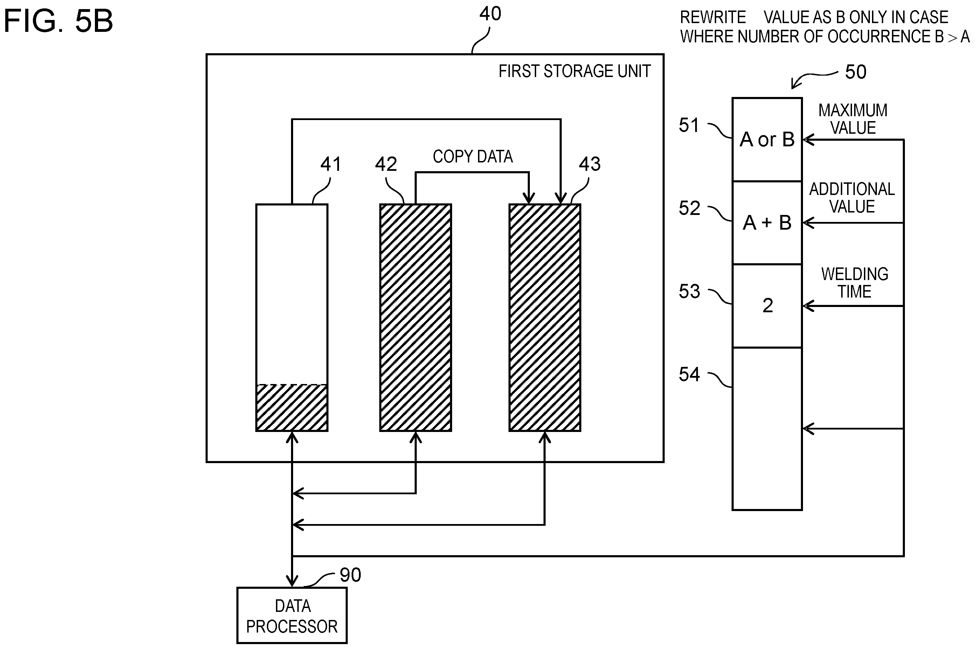

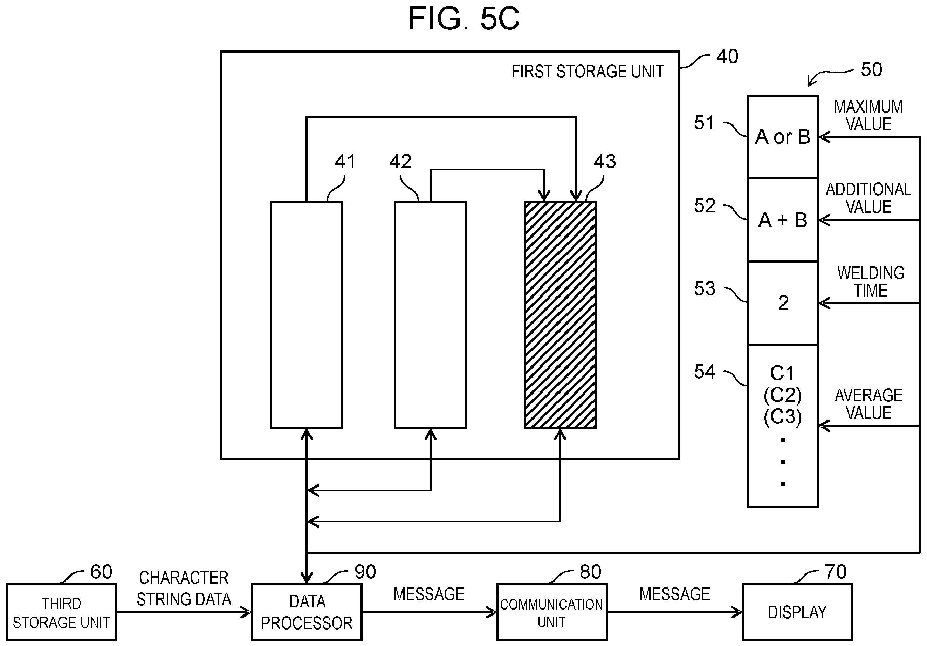

FIG. 3 illustrates a procedure for detecting and displaying a micro-short circuit. FIG. 4 illustrates an example of output waveforms of a welding voltage and a welding current. In addition, FIG. 5A schematically illustrates a flow of data in the first storage unit and the second storage unit in a case where the capacity of the first memory is full. FIG. 5B schematically illustrates a flow of data in the first storage unit and the second storage unit in a case where the capacity of the second memory is full. FIG. 5C schematically illustrates a flow of data in the first storage unit and the second storage unit at the end of a welding period.

As illustrated in FIG. 3, voltage/current detector 20 acquires an output voltage value of a welding voltage based on sampling frequency fs in response to a request from data processor 90 (step S1). Data processor 90 stores the acquired output voltage value in first memory 41 (step S2). For example, in the present exemplary embodiment, sampling frequency fs is set to about 100 kHz. This corresponds to a cycle of about 0.01 msec, and is a frequency sufficiently high to detect a micro-short circuit occurring in a cycle of less than or equal to 2 msec. In addition, the frequency is sufficiently low with respect to a processing speed (more than or equal to several hundred MHz) in a general CPU.

Next, data processor 90 determines whether a data volume of the output voltage values stored in first memory 41 has reached the capacity of first memory 41, that is, whether first memory 41 is full (step S3). When the determination result is NO, data processor 90 returns to step S1 and continues the data acquisition and the data storage in first memory 41.

On the other hand, when the data volume of the output voltage values stored in first memory 41 has reached the capacity, data processor 90 stores output voltage values of the welding voltage acquired thereafter in second memory 42 (step S4). Data processor 90 further copies all the output voltage values stored in first memory 41 to evacuation memory 43 to make a backup (step S5). Note that the order in which steps S4 and S5 are executed is not limited to the case illustrated in FIG. 3, and for example, steps S4 and S5 may be executed simultaneously.

Data processor 90 analyzes the output voltage values stored in first memory 41 and calculates the number of occurrences of the micro-short circuit (step S6). As illustrated in FIG. 4, an output voltage value corresponding to the distance between the tip of welding wire 400 and workpiece W is essentially detected during the arc period. However, when a micro-short circuit occurs, a greatly reduced output voltage value is detected. Electric resistance between welding wire 400 and workpiece W is higher in the micro-short circuit than in a normal short circuit. Therefore, the output current value of the welding current does not steeply increase, but only slightly fluctuates.

Data processor 90 compares the preset welding condition with the output voltage value of the welding voltage. When the output voltage value of the welding voltage decreases to less than or equal to a predetermined value In a period set as the arc period, data processor 90 determines that a micro-short circuit has occurred, and counts the number of occurrences of the micro-short circuit. The counted number of occurrences (here, A times) is stored in each of first storage region 51 and second storage region 52 of second storage unit 50 (step S7).

As illustrated in FIG. 5A, the number of occurrences (A times) of the micro-short circuit calculated by analyzing the output voltage values in first memory 41 is stored in first storage region 51. Further, as described later, the number of occurrences of the micro-short circuit is added and stored in second storage region 52. In FIG. 5A, the same value as that of first storage region 51 is stored in second storage region 52.

Further, data processor 90 stores a predetermined value as a welding time in third storage region 63 of second storage unit 50 (step S8). In the present exemplary embodiment, "1 second" is added and stored as the predetermined value. This value is obtained by setting a maximum number of output voltage values stored in first memory 41 to 10,0000 and multiplying the maximum number by the sampling cycle of 0.01 msec. In addition, this value is not particularly limited to the value in the present exemplary embodiment, and can be appropriately changed in accordance with the capacities of first memory 41 and second memory 42 and sampling frequency fs. Further, after the data analysis, the output voltage values of first memory 41 are deleted, and first memory 41 becomes empty. Note that when next output voltage value is stored in first memory 41 without deletion of the output voltage values, output voltage values input later may be sequentially written in first memory 41.

Hereinafter, as for steps S9 to S13, only first memory 41 and second memory 42 in steps S1 to S5 are replaced with each other. Therefore, the processing contents thereof are similar, and thus the description thereof will be omitted.

Data processor 90 adds the number of occurrences of the micro-short circuit (here, B times) calculated by analyzing the output voltage values stored in second memory 42 to second storage region 52 of second storage unit 50 and stores the number (step S14). Further, data processor 90 adds 1 second to third storage region 53 and stores the result (step S15).

That is, as illustrated in FIG. 5B, the value stored in second storage region 52 is (A + B), and thus the value stored in third storage region 53 is 2 (seconds).

In addition, data processor 90 determines whether the calculated number of occurrences (B times) is larger than the previous calculated value (A times) (step S16). When the determination result is YES (B > A), data processor 90 performs rewriting to replace the values stored in first storage region 51 by the current calculated value (B times) (step S17). On the other hand, when the determination result is NO (B ≤ A), data processor 90 proceeds to the next step without rewriting. Further, all the output voltage values stored in second memory 42 are deleted, or when the output voltage values are stored in second memory 42, output voltage values input later are sequentially written in second memory 42.

Data processor 90 determines whether the welding period ends (step S18). When the welding period is not ended, data processor 90 returns to step S1. On the other hand, when the welding period is ended, as illustrated in FIG. 5C, data processor 90 calculates an average value (C1 = (A + B)/2) of the number of occurrences of micro-short circuit. Specifically, data processor 90 divides an added value (= A + B) stored in second storage region 52 by an added value (= 2) stored in third storage region 53. Data processor 90 stores the calculated average value of the number of occurrences in fourth storage region 64 of second storage unit 50 (step S19).

When one welding period ends, another workpiece is set, and next arc welding is started. In each welding period, the processing illustrated in FIG. 3 is executed, and the average values (C1, C2, C3 ......) of the number of occurrences are sequentially stored in fourth storage region 54 of second storage unit 50 (see FIG. 5C).

Note that the determination in step S18 may also be performed after the end of step S8. At this time, when the welding period has ended, steps S9 to S17 are skipped, and the processing proceeds to step S19. In a case where the welding period ends before the data volume of the output voltage values stored in each of first memory 41 and second memory 42 reaches the capacity, the number of occurrences of the micro-short circuit, an integrated value, and the welding time are calculated based on the output voltage values stored in each memory so far. Furthermore, an average value of the number of occurrences is calculated based on the calculated values. These values are stored in corresponding storage regions of second storage unit 50.

In addition, data processor 90 analyzes the maximum value of the number of occurrences of the micro-short circuit in one welding period stored in first storage region 51 and the average value of the number of occurrences of the micro-short circuit in each welding period stored in fourth storage region 54. Data processor 90 then reads character string data from third storage unit 60 in accordance with the analysis, and displays the character string data as a message on display 70 (step S20).

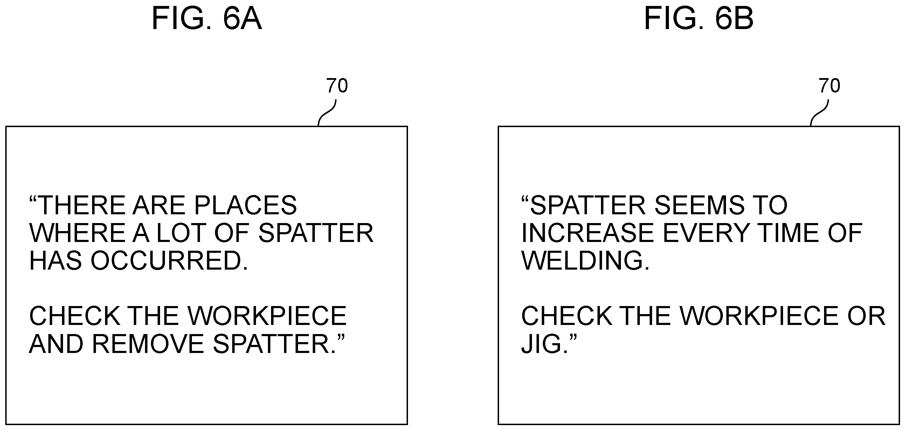

FIGS. 6A and 6B illustrate examples of messages displayed on the display. Specifically, FIG. 6A illustrates the example in which the number of occurrences of short-circuit welding in one welding period exceeds an allowable value. FIG. 6B illustrates the example in which the average value of the number of occurrences increases in a plurality of welding times.

For example, in a case where short-circuit welding occurs more than or equal to 100 times in one welding period, as illustrated in FIG. 6A, a message is displayed on display 70 for checking outer appearance of a workpiece and removal of spatter. Further, when the average value of the number of occurrences increases every time of repetition of welding, as illustrated in FIG. 6B, a message saying the average value increases and a message for checking a workpiece and a jig used in welding are displayed on display 70. A welding worker checks these messages and takes necessary measures.

### [Effects and others]

As described above, arc welding machine 1000 according to the present exemplary embodiment includes welding torch (welding unit) 300 that holds welding wire 400, wire feeding device 200, and welding power supply device 100. Welding power supply device 100 includes at least current/voltage detector (data acquisition unit) 20, data processor 90, first storage unit 40, and second storage unit 50.

Welding power supply device 100 outputs a welding voltage to welding wire 400 held by welding torch 300. Current/voltage detector 20 sequentially acquires a plurality of output voltage values of the welding voltage at sampling frequency fs. First storage unit 40 stores the plurality of output voltage values sequentially acquired by current/voltage detector 20.

Data processor 90 calculates the number of occurrences of the micro-short circuit and the average value of the number of occurrences of the micro-short circuit generated between welding wire 400 and workpiece W, based on the plurality of output voltage values stored in first storage unit 40. Data processor 90 then stores the calculated number of occurrences of the micro-short circuit and the calculated average value of the number of occurrences of the micro-short circuit in second storage unit 50.

Such a configuration of arc welding machine 1000 makes it possible to securely recognize the number of occurrences of the micro-short circuit generated during the welding period. Further, this makes it possible to estimate the occurrence state of spatter during the welding period. Note that data processor 90 may calculate only any one of the number of occurrences of the micro-short circuit and the average value of the number of occurrences of the micro-short circuit.

First storage unit 40 includes first memory (first temporary storage unit) 41, second memory (second temporary storage unit) 42, and evacuation memory (third temporary storage unit) 43.

Data processor 90 stores the output voltage values of the welding voltage acquired by current/voltage detector 20 in one of first memory 41 and second memory 42, for example, in first memory 41 until the data volume of the output voltage values stored in first memory 41 reaches the capacity of first memory 41. When the data volume of the output voltage values stored in first memory 41 reaches the capacity of first memory 41, data processor 90 copies the output voltage values stored in first memory 41 to evacuation memory 43. At the same time, data processor 90 switches the storage destination of the output voltage values of the welding voltage to second memory 42. Further, data processor 90 stores, in second memory 42, the output voltage values of the welding voltage acquired by current/voltage detector 20 until the data volume of the output voltage values stored in second memory 42 reaches the capacity of second memory 42. When the data volume of the output voltage values stored in second memory 42 reaches the capacity of second memory 42, data processor 90 copies the output voltage values stored in second memory 42 to evacuation memory 43. At the same time, data processor 90 switches the storage destination of the output voltage values of the welding voltage to first memory 41.

As described above, alternative switching of the memories for storing the output voltage values makes it possible to eliminate the need for a largecapacity memory for storing a large amount of output voltage values and to simplify the internal configuration of first storage unit 40. In addition, the cost of arc welding machine 1000 can be reduced.

Further, when the output voltage values are backed up and copied to evacuation memory 43 every time when either of the memories is full, the number of occurrences of the micro-short circuit and the like can be evaluated later even when some trouble occurs at the time of data processing in data processor 90 or a trouble occurs in data communication between current/voltage detector 20 and data processor 90 due to a trouble in communication unit 80 or the like. Further, the output voltage values of the welding voltage acquired by current/voltage detector 20 can be stored in first storage unit 40 without interruption, and oversight of a micro-short circuit can be prevented.

Further, when the data volume of the output voltage values stored in first memory 41 reaches the capacity of first memory 41 or when the data volume of the output voltage values stored in second memory 42 reaches the capacity of second memory 42, data processor 90 calculates the number of occurrences of the micro-short circuit and the average value thereof.

In this way, the volume of data used for one data operation can be reduced, and the processing load of the CPU and the like constituting data processor 90 is reduced. In addition, data processor 90 may calculate the number of occurrences of the micro-short circuit and the like until the data volume of the output voltage values to be stored reaches the capacity of first memory 41 or second memory 42. Therefore, the processing speed of data processor 90 can be set to a practical range. As a result, it is not necessary to use an expensive CPU or the like, and the cost of arc welding machine 1000 can be reduced.

Arc welding machine 1000 according to the present exemplary embodiment further includes third storage unit 60 and display 70. Third storage unit 60 stores the display data associated with the number of occurrences of the micro-short circuit and the average value thereof stored in second storage unit 50.

Data processor 90 calls the display data corresponding to the number of occurrences of the micro-short circuit and the average value thereof from third storage unit 60 and causes display 70 to display the display data.

Such a configuration of arc welding machine 1000 makes it possible to estimate the occurrence state of spatter during the welding period, and based on the result, makes it possible to attract the attention of a welding worker or give a work instruction for improvement to the welding worker. In addition, when the welding worker changes the welding condition in accordance with the instruction content, the micro-short circuit is reduced, and thus the spatter adhering to workpiece W is reduced. This results in improvement of the welding quality.

### <First modification>

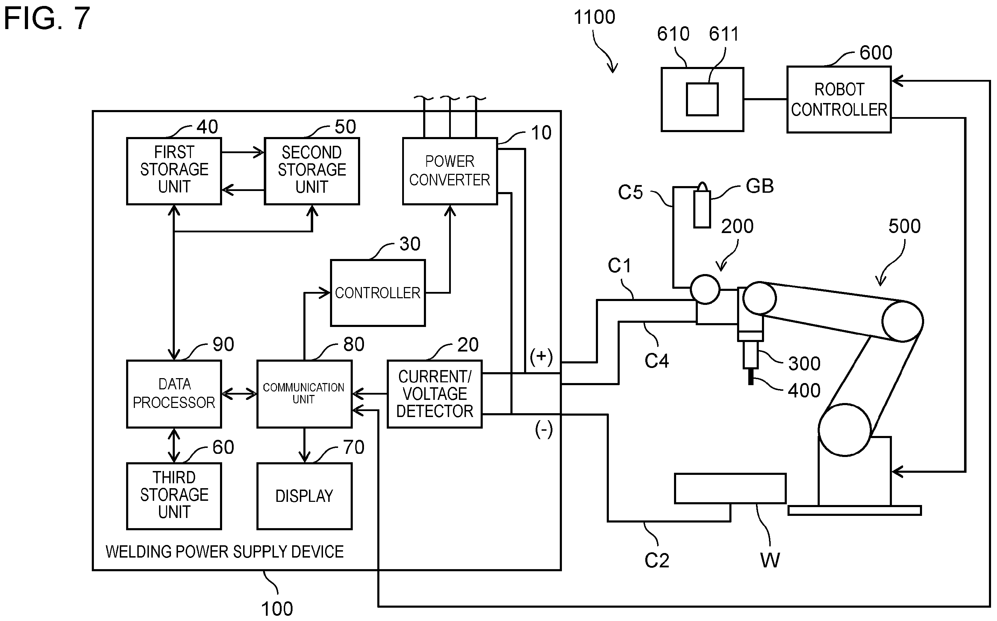

FIG. 7 is a schematic diagram illustrating a configuration of an arc welding machine according to the present modification. In FIG. 7, the same parts as those in the first exemplary embodiment are denoted by the same reference marks, and the detailed description thereof will be omitted. Further, torch cable C3 is not illustrated.

Arc welding machine 1100 described in the present modification is different from arc welding machine 1000 described in the first exemplary embodiment in that arc welding machine 1100 includes welding robot 500 to which welding torch 300 and wire feeding device 200 are attached, and robot controller 600 that controls the operation of welding robot 500. Note that robot controller 600 includes teaching pendant 610 connected thereto and configured to teach a movement trajectory of welding robot 500. Teaching pendant 610 is provided with display panel (another display) 611.

As illustrated in the present modification, when welding torch 300 is attached to welding robot 500, the distance between the tip of welding wire 400 and workpiece W may be more likely to fluctuate than in the configuration described in the first exemplary embodiment due to movement of welding robot 500 during arc welding.

Therefore, depending on the form of operation control of welding robot 500, for example, the content of a control program, a micro-short circuit is likely to occur, and thus a large amount of spatter may occur.

On the other hand, according to the present modification, data processor 90 is configured to be capable of performing data communication with robot controller 600 via communication unit 80. Further, data processor 90 is configured to associate the control information on welding robot 500 with the character string data stored in third storage unit 60 to newly generate another piece of character string data when the number of occurrences of the micro-short circuit is larger than or equal to a predetermined value. Further, data processor 90 is configured to display another character string data on display 70. For example, when the control program number is 3 and the number of occurrences of the micro-short circuit is larger than or equal to the predetermined value, a message "a lot of spatter is generated when the program number 3 is used" is displayed on display 70.

Such a configuration makes it possible to quickly find a defect in a specific program among the control programs for controlling the operation of welding robot 500. In addition, the welding worker or the like improves the defect to be capable of reducing spatter adhering to workpiece W and improving the welding quality.

Note that the message may be displayed on display panel 611 of teaching pendant 610.

### <Second modification>

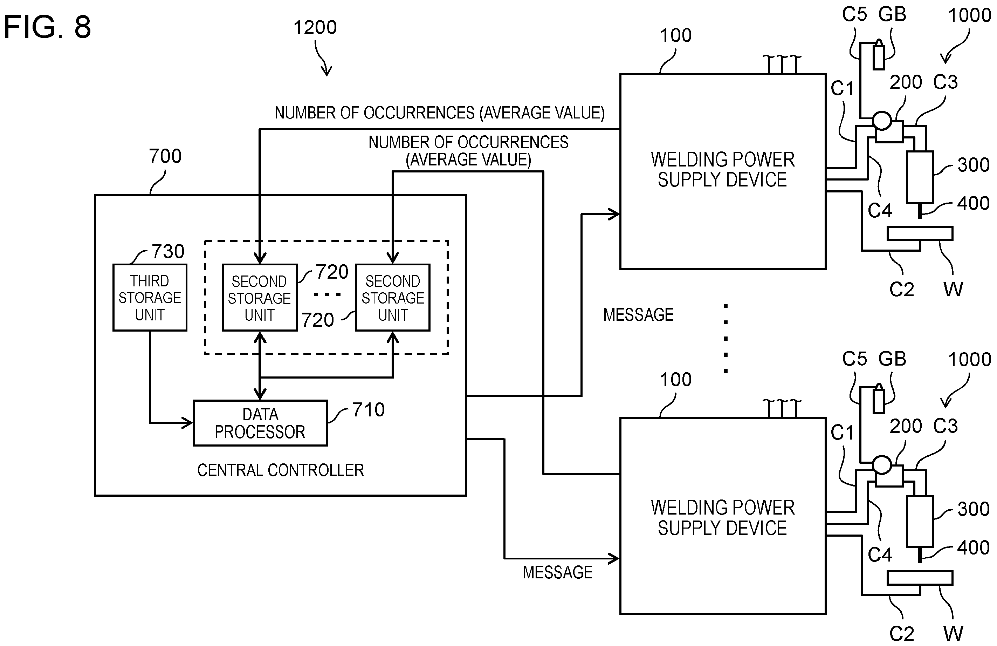

FIG. 8 is a schematic diagram illustrating a configuration of a welding system according to the present invention. Specifically, FIG. 8 illustrates a configuration of welding system 1200 in which one central controller 700 is connected to a plurality of arc welding machines 1000. Note that in FIG. 8, illustration of the inside of each of welding power supply devices 100 is omitted.

Central controller 700 transmits a program for controlling a welding voltage and a welding current to each welding power supply device 100, based on workpiece W. Further, central controller 700 includes a plurality of second storage units 720 corresponding to the number of arc welding machines 1000 to be connected. Further, central controller 700 includes a data processor (another data processor) 710 and third storage unit 730.

The number of occurrences of a micro-short circuit and the average value thereof calculated by data processor 90 of each welding power supply device 100 are transmitted to and stored in the plurality of second storage units 720 disposed in central controller 700 via a predetermined data line. On the other hand, second storage unit 50 and third storage unit 60 are omitted in each welding power supply device 100.

When the number of occurrences of the micro-short circuit and the average value thereof are larger than or equal to the predetermined value, or the average value of the number of occurrences tends to increase, central controller 700 reads the character string data from third storage unit 730, and causes display 70 of corresponding welding machine 1000 to display a message.

With this configuration of welding system 1200, a number of storage units disposed in welding power supply device 100 of each arc welding machine 1000 can be reduced, and thus the configuration of welding power supply device 100 can be simplified. In addition, since the number of occurrences of the micro-short circuit in one welding period is small in data volume and data transmission frequency, data can be transmitted from each data processor 90 to central controller 700 by a normal serial communication method.

Note that data processor 90 of each welding power supply device 100 may transmit only the number of occurrences of micro-short circuit to central controller 700, and data processor 710 of central controller 700 may calculate the average value of the number of occurrences of the micro-short circuit in each arc welding machine 1000. Such a configuration can reduce the processing load of data processor 90 of each welding power supply device 100.

In addition, display 70 that displays a message may be directly connected to central controller 700. In this case, display 70 may be provided for each arc welding machine 1000, or one display may be divided into screens, and divided portions and arc welding machines 1000 may be associated with each other. In addition, after the unit number of arc welding machine 1000 is assigned to the message, the message may be displayed by switching each time on one display.

Note that a new exemplary embodiment can be formed by appropriately combining the components described in the first exemplary embodiment and the modifications. For example, in welding system 1200 illustrated in FIG. 8, each arc welding machine 1000 may include welding robot 500 and robot controller 600 as illustrated in FIG. 7. In this case, the control program for welding robot 500 may be transmitted from central controller 700 to each robot controller 600.

The first exemplary embodiment has referred to the example in which data processor 90 and first to third storage units 40 to 60 are disposed inside welding power supply device 100. However, an arithmetic processing device, not illustrated, may be provided outside welding power supply device 100, and data processor 90 and first to third storage units 40 to 60 may be disposed inside the arithmetic processing unit. Display 70 may also be provided separately from welding power supply device 100.

In addition, although an example in which controller 30 and data processor 90 are separately provided has been described, they may be integrated.

Further, the data stored in third storage unit 60 may include image data and audio data in addition to the character string data. In other words, third storage unit 60 stores display data. Such a configuration can attract the attention of a welding worker or give a work instruction to the welding worker more appropriately.

### INDUSTRIAL APPLICABILITY

The welding machine of the present invention is useful as a consumable electrode arc welding machine because it can detect the number of occurrences of a micro-short circuit and estimate the occurrence state of spatter.

### REFERENCE MARKS IN THE DRAWINGS

- 10: power converter
- 20: current/voltage detector (data acquisition unit)
- 30: controller
- 40: first storage unit
- 41: first memory (first temporary storage unit)
- 42: second memory (second temporary storage unit)
- 43: evacuation memory (third temporary storage unit)
- 50: second storage unit
- 51: first storage region
- 52: second storage region
- 53: third storage region
- 54: fourth storage region
- 60: third storage unit
- 70: display
- 80: communication unit
- 90: data processor
- 100: welding power supply device
- 200: wire feeding device
- 300: welding torch
- 400: welding wire
- 500: welding robot
- 600: robot controller
- 700: central controller
- 710: data processor (another data processor)
- 720: second storage unit
- 730: third storage unit
- 1000, 1100: arc welding machine
- 1200: welding system

## Claims

1. A welding machine (1000) comprising:
a welding unit (300);
a data acquisition unit (20); and
a first storage unit (40), wherein
the data acquisition unit is configured to sequentially acquire a plurality of output voltage values of the welding unit (300) at a predetermined sampling frequency, and
the first storage unit (40) is configured to store the plurality of output voltage values sequentially acquired by the data acquisition unit (20),
**characterized in that** the welding machine (1000) further includes a data processor (90) and a second storage unit (50),
the data processor (90) is configured to calculate at least one of a number of occurrences of a micro-short circuit occurring between the welding unit (300) and a workpiece (W) and an average value of the number of occurrences of the micro-short circuit, based on the plurality of output voltage values stored in the first storage unit (40), and store the at least one of the calculated number of occurrences of the micro-short circuit and the calculated average value of the number of occurrences of the micro-short circuit in the second storage unit (50).

2. The welding machine (1000) according to claim 1, wherein
the first storage unit (40) includes a first temporary storage unit (41), a second temporary storage unit (42), and a third temporary storage unit (43), and
the data processor (90) is configured to store, in one of the first temporary storage unit (41) and the second temporary storage unit (42), the plurality of output voltage values sequentially acquired by the data acquisition unit (20) until a data volume of the plurality of output voltage values stored in the one of the first temporary storage unit (41) and the second temporary storage unit (42) reaches a capacity of the one of the first temporary storage unit (41) and the second temporary storage unit (42), and, when the data volume of the plurality of stored output voltage values reaches the capacity of the one of the first temporary storage unit (41) and the second temporary storage unit (42), copy the plurality of output voltage values stored in the one of the first temporary storage unit (41) and the second temporary storage unit (42) to the third temporary storage unit (43) and switch a storage destination of the plurality of output voltage values acquired by the data acquisition unit (20) to another one of the first temporary storage unit (41) and the second temporary storage unit (42).

3. The welding machine (1000) according to claim 2, wherein the data processor (90) is configured to calculate the at least one of the number of occurrences of the micro-short circuit and the average value of the number of occurrences of the micro-short circuit when the data volume of the plurality of output voltage values stored in the first temporary storage unit (41) reaches the capacity of the first temporary storage unit (41) or when the data volume of the plurality of output voltage values stored in the second temporary storage unit (42) reaches the capacity of the second temporary storage unit (42).

4. The welding machine (1000) according to any one of claims 1 to 3, further comprising:
a third storage unit (60); and
a display (70), wherein
the third storage unit (60) is configured to store display data associated with the at least one of the number of occurrences of the micro-short circuit and the average value of the number of occurrences of the micro-short circuit stored in the second storage unit (50), and
the data processor (90) is configured to call the display data from the third storage unit (60) and cause the display (70) to display the display data.

5. The welding machine (1100) according to claim 4, further comprising:
a welding robot (500) to which the welding unit (300) is attached; and
a robot controller (600) configured to control an operation of the welding robot (500), wherein the data processor (90) is configured to associate control information about the welding robot (500) with the display data stored in the third storage unit (60) to newly generate another piece of display data, and cause the display (70) or another display (611) provided in the robot controller (600) to display the other piece of display data when the number of occurrences of the micro-short circuit is larger than or equal to a predetermined value.

6. A welding system (1200) comprising:
a plurality of welding machines (1000),
each of the plurality of welding machines (1000) comprising;
a welding unit (300);
a data acquisition unit (20); and
a first storage unit (40), wherein
the data acquisition unit (20) is configured to sequentially acquire a plurality of output voltage values of the welding unit (300) at a predetermined sampling frequency, and
the first storage unit (40) is configured to store the plurality of output voltage values sequentially acquired by the data acquisition unit (20), **characterized in that** each of the plurality of welding machines (1000) further includes a data processor (90) and a display (70), and the welding system (1200) further includes a central controller (700) connected to the plurality of welding machines (1000), wherein
the central controller (700) includes a second storage unit (720) and a third storage unit (730),
the data processor (90) is configured to calculate at least one of a number of occurrences of a micro-short circuit occurring between the welding unit (300) and a workpiece (W) and an average value of the number of occurrences of the micro-short circuit, based on the plurality of output voltage values stored in the first storage unit (40), and store the at least one of the calculated number of occurrences of the micro-short circuit and the calculated average value of the number of occurrences of the micro-short circuit in the second storage unit (720),
the third storage unit (730) is configured to store display data associated with the at least one of the number of occurrences of the micro-short circuit and the average value of the number of occurrences of the micro-short circuit stored in the second storage unit (720), and
the data processor (90) is configured to call the display data from the third storage unit (730) and causes the display (70) to display the display data.

7. The welding system according to claim 6, wherein
the central controller (700) further includes another data processor (710), and
the other data processor (710) is configured to call display data corresponding to a number of occurrences of a micro-short circuit or an average value of the number of occurrences of the micro-short circuit from the third storage unit (730) and cause the display (70) to display the display data when the number of occurrences of the micro-short circuit is larger than or equal to a predetermined value or when the average value of the number of occurrences of the micro-short circuit tends to increase in one of the plurality of welding machines (1000).

8. The welding system (1200) according to claim 6, wherein
each of the plurality of welding machines (1000) further includes
a welding robot (500) to which the welding unit (300) is attached; and
a robot controller (600) configured to control an operation of the welding robot (500),
wherein the data processor (90) is configured to associate control information about the welding robot (500) with the display data stored in the third storage unit (730) to newly generate another piece of display data, and cause the display (70) or another display (611) provided in the robot controller (600) to display the other piece of display data when the number of occurrences of the micro-short circuit is larger than or equal to a predetermined value.

## Patentansprüche

1. Schweißmaschine (1000), die Folgendes umfasst:
eine Schweißeinheit (300);
eine Datenerfassungseinheit (20) und
eine erste Speichereinheit (40), wobei
die Datenerfassungseinheit dazu ausgelegt ist, eine Vielzahl von Ausgangsspannungswerten der Schweißeinheit (300) mit einer vorbestimmten Abtastfrequenz sequenziell zu erfassen, und
die erste Speichereinheit (40) dazu ausgelegt ist, die Vielzahl von Ausgangsspannungswerten, die von der Datenerfassungseinheit (20) sequenziell erfasst werden, zu speichern,
**dadurch gekennzeichnet, dass** die Schweißmaschine (1000) ferner einen Datenprozessor (90) und eine zweite Speichereinheit (50) beinhaltet,
der Datenprozessor (90) dazu ausgelegt ist, auf Basis der Vielzahl von Ausgangsspannungswerten, die in der ersten Speichereinheit (40) gespeichert sind, mindestens eines von einer Anzahl des Auftretens eines Mikrokurzschlusses, der zwischen der Schweißeinheit (300) und einem Werkstück (W) auftritt, und einem Durchschnittswert der Anzahl des Auftretens des Mikrokurzschlusses zu berechnen und das mindestens eine der berechneten Anzahl des Auftretens des Mikrokurzschlusses und des berechneten Durchschnittswerts der Anzahl des Auftretens des Mikrokurzschlusses in der zweiten Speichereinheit (50) zu speichern.

2. Schweißmaschine (1000) nach Anspruch 1, wobei
die erste Speichereinheit (40) eine erste temporäre Speichereinheit (41), eine zweite temporäre Speichereinheit (42) und eine dritte temporäre Speichereinheit (43) beinhaltet und
der Datenprozessor (90) dazu ausgelegt ist, in einer der ersten temporären Speichereinheit (41) und der zweiten temporären Speichereinheit (42) die Vielzahl von Ausgangsspannungswerten, die von der Datenerfassungseinheit (20) sequenziell erfasst werden, zu speichern, bis ein Datenvolumen der Vielzahl von Ausgangsspannungswerten, die in der einen der ersten temporären Speichereinheit (41) und der zweiten temporären Speichereinheit (42) gespeichert sind, eine Kapazität der einen der ersten temporären Speichereinheit (41) und der zweiten temporären Speichereinheit (42) erreicht, und, wenn das Datenvolumen der Vielzahl von gespeicherten Ausgangsspannungswerten die Kapazität der einen der ersten temporären Speichereinheit (41) und der zweiten temporären Speichereinheit (42) erreicht, die Vielzahl von Ausgangsspannungswerten, die in der einen der ersten temporären Speichereinheit (41) und der zweiten temporären Speichereinheit (42) gespeichert sind, in die dritte temporäre Speichereinheit (43) zu kopieren und ein Speicherziel der Vielzahl von Ausgangsspannungswerten, die von der Datenerfassungseinheit (20) erfasst werden, zu einer anderen der ersten temporären Speichereinheit (41) und der zweiten temporären Speichereinheit (42) umzuschalten.

3. Schweißmaschine (1000) nach Anspruch 2, wobei der Datenprozessor (90) dazu ausgelegt ist, das mindestens eine der Anzahl des Auftretens des Mikrokurzschlusses und des Durchschnittswerts der Anzahl des Auftretens des Mikrokurzschlusses zu berechnen, wenn das Datenvolumen der Vielzahl von Ausgangsspannungswerten, die in der ersten temporären Speichereinheit (41) gespeichert sind, die Kapazität der ersten temporären Speichereinheit (41) erreicht oder wenn das Datenvolumen der Vielzahl von Ausgangsspannungswerten, die in der zweiten temporären Speichereinheit (42) gespeichert sind, die Kapazität der zweiten temporären Speichereinheit (42) erreicht.

4. Schweißmaschine (1000) nach einem der Ansprüche 1 bis 3, die ferner Folgendes umfasst:
eine dritte Speichereinheit (60) und
eine Anzeige (70), wobei
die dritte Speichereinheit (60) dazu ausgelegt ist, Anzeigedaten zu speichern, die mit dem mindestens einen der Anzahl des Auftretens des Mikrokurzschlusses und dem Durchschnittswert der Anzahl des Auftretens des Mikrokurzschlusses verknüpft sind, die in der zweiten Speichereinheit (50) gespeichert sind, und
der Datenprozessor (90) dazu ausgelegt ist, die Anzeigedaten aus der dritten Speichereinheit (60) aufzurufen und die Anzeige (70) zu veranlassen, die Anzeigedaten anzuzeigen.

5. Schweißmaschine (1100) nach Anspruch 4, die ferner Folgendes umfasst:
einen Schweißroboter (500), an dem die Schweißeinheit (300) befestigt ist; und
eine Robotersteuerung (600), die dazu ausgelegt ist, einen Betrieb des Schweißroboters (500) zu steuern, wobei der Datenprozessor (90) dazu ausgelegt ist, Steuerinformationen über den Schweißroboter (500) mit den in der dritten Speichereinheit (60) gespeicherten Anzeigedaten zu verknüpfen, um einen weiteren Teil von Anzeigedaten neu zu erzeugen und die Anzeige (70) oder eine andere Anzeige (611), die in der Robotersteuerung (600) bereitgestellt ist, zu veranlassen, den anderen Teil der Anzeigedaten anzuzeigen, wenn die Anzahl des Auftretens des Mikrokurzschlusses größer als oder gleich einem vorbestimmten Wert ist.

6. Schweißsystem (1200), das Folgendes umfasst:
eine Vielzahl von Schweißmaschinen (1000),
wobei jede der Vielzahl von Schweißmaschinen (1000) Folgendes umfasst;
eine Schweißeinheit (300);
eine Datenerfassungseinheit (20) und
eine erste Speichereinheit (40), wobei
die Datenerfassungseinheit (20) dazu ausgelegt ist, eine Vielzahl von Ausgangsspannungswerten der Schweißeinheit (300) mit einer vorbestimmten Abtastfrequenz sequenziell zu erfassen, und
die erste Speichereinheit (40) dazu ausgelegt ist, die Vielzahl von Ausgangsspannungswerten, die von der Datenerfassungseinheit (20) sequenziell erfasst werden, zu speichern, **dadurch gekennzeichnet, dass** jede der Vielzahl von Schweißmaschinen (1000) ferner einen Datenprozessor (90) und eine Anzeige (70) beinhaltet und das Schweißsystem (1200) ferner eine zentrale Steuerung (700) beinhaltet, die mit der Vielzahl von Schweißmaschinen (1000) verbunden ist, wobei
die zentrale Steuerung (700) eine zweite Speichereinheit (720) und eine dritte Speichereinheit (730) beinhaltet,
der Datenprozessor (90) dazu ausgelegt ist, auf Basis der Vielzahl von Ausgangsspannungswerten, die in der ersten Speichereinheit (40) gespeichert sind, mindestens eines von einer Anzahl des Auftretens eines Mikrokurzschlusses, der zwischen der Schweißeinheit (300) und einem Werkstück (W) auftritt, und einem Durchschnittswert der Anzahl des Auftretens des Mikrokurzschlusses zu berechnen und das mindestens eine der berechneten Anzahl des Auftretens des Mikrokurzschlusses und des berechneten Durchschnittswerts der Anzahl des Auftretens des Mikrokurzschlusses in der zweiten Speichereinheit (720) zu speichern,
die dritte Speichereinheit (730) dazu ausgelegt ist, Anzeigedaten zu speichern, die mit dem mindestens einen der Anzahl des Auftretens des Mikrokurzschlusses und dem Durchschnittswert der Anzahl des Auftretens des Mikrokurzschlusses verknüpft sind, die in der zweiten Speichereinheit (720) gespeichert sind, und
der Datenprozessor (90) dazu ausgelegt ist, die Anzeigedaten aus der dritten Speichereinheit (730) aufzurufen, und die Anzeige (70) veranlasst, die Anzeigedaten anzuzeigen.

7. Schweißsystem nach Anspruch 6, wobei
die zentrale Steuerung (700) ferner einen weiteren Datenprozessor (710) beinhaltet und
der weitere Datenprozessor (710) dazu ausgelegt ist, Anzeigedaten, die einer Anzahl des Auftretens eines Mikrokurzschlusses oder einem Durchschnittswert der Anzahl des Auftretens des Mikrokurzschlusses entsprechen, aus der dritten Speichereinheit (730) aufzurufen und die Anzeige (70) zu veranlassen, die Anzeigedaten anzuzeigen, wenn die Anzahl des Auftretens des Mikrokurzschlusses größer als oder gleich einem vorbestimmten Wert ist oder wenn der Durchschnittswert der Anzahl des Auftretens des Mikrokurzschlusses in einer der Vielzahl von Schweißmaschinen (1000) zu einer Erhöhung neigt.

8. Schweißsystem (1200) nach Anspruch 6, wobei
jede der Vielzahl von Schweißmaschinen (1000) ferner Folgendes beinhaltet
einen Schweißroboter (500), an dem die Schweißeinheit (300) befestigt ist; und
eine Robotersteuerung (600), die dazu ausgelegt ist, einen Betrieb des Schweißroboters (500) zu steuern,
wobei der Datenprozessor (90) dazu ausgelegt ist, Steuerinformationen über den Schweißroboter (500) mit den in der dritten Speichereinheit (730) gespeicherten Anzeigedaten zu verknüpfen, um einen weiteren Teil von Anzeigedaten neu zu erzeugen und die Anzeige (70) oder eine andere Anzeige (611), die in der Robotersteuerung (600) bereitgestellt ist, zu veranlassen, den anderen Teil der Anzeigedaten anzuzeigen, wenn die Anzahl des Auftretens des Mikrokurzschlusses größer als oder gleich einem vorbestimmten Wert ist.

## Revendications

1. Machine à souder (1000) comprenant :
une unité de soudage (300) ;
une unité d'acquisition de données (20) ; et
une première unité de stockage (40), dans laquelle
l'unité d'acquisition de données est configurée pour acquérir séquentiellement une pluralité de valeurs de tension de sortie de l'unité de soudage (300) à une fréquence d'échantillonnage prédéterminée, et
la première unité de stockage (40) est configurée pour stocker la pluralité de valeurs de tension de sortie acquises séquentiellement par l'unité d'acquisition de données (20),
**caractérisée en ce que** la machine à souder (1000) comporte en outre un processeur de données (90) et une deuxième unité de stockage (50),
le processeur de données (90) est configuré pour calculer au moins un parmi un nombre d'occurrences d'un micro-court-circuit entre l'unité de soudage (300) et une pièce à travailler (W) et une valeur moyenne du nombre d'occurrences du micro-court-circuit sur la base de la pluralité de valeurs de tension de sortie stockées dans la première unité de stockage (40), et stocker l'au moins un parmi le nombre d'occurrences du micro-court-circuit calculé et la valeur moyenne calculée du nombre d'occurrences du micro-court-circuit dans la deuxième unité de stockage (50).

2. Machine à souder (1000) selon la revendication 1, dans laquelle
la première unité de stockage (40) comporte une première unité de stockage temporaire (41), une deuxième unité de stockage temporaire (42) et une troisième unité de stockage temporaire (43), et
le processeur de données (90) est configuré pour stocker dans une parmi la première unité de stockage temporaire (41) et la deuxième unité de stockage temporaire (42) la pluralité de valeurs de tension de sortie acquises séquentiellement par l'unité d'acquisition de données (20) jusqu'à ce qu'un volume de données de la pluralité de valeurs de tension de sortie stockées dans ladite unité de stockage parmi la première unité de stockage temporaire (41) et la deuxième unité de stockage temporaire (42) atteigne une capacité de ladite unité de stockage parmi la première unité de stockage temporaire (41) et la deuxième unité de stockage temporaire (42), et lorsque le volume de données de la pluralité de valeurs de tension de sortie stockées atteint la capacité de ladite unité de stockage parmi la première unité de stockage temporaire (41) et la deuxième unité de stockage temporaire (42), copier la pluralité de valeurs de tension de sortie stockées dans ladite unité de stockage parmi la première unité de stockage temporaire (41) et la deuxième unité de stockage temporaire (42) dans la troisième unité de stockage temporaire (43) et commuter une destination de stockage de la pluralité de valeurs de tension de sortie acquises par l'unité d'acquisition de données (20) vers une autre une parmi la première unité de stockage temporaire (41) et la deuxième unité de stockage temporaire (42).

3. Machine à souder (1000) selon la revendication 2, dans laquelle le processeur de données (90) est configuré pour calculer l'au moins un parmi le nombre d'occurrences du micro-court-circuit et la valeur moyenne du nombre d'occurrences du micro-court-circuit lorsque le volume de données de la pluralité de valeurs de tension de sortie stockées dans la première unité de stockage temporaire (41) atteint la capacité de la première unité de stockage temporaire (41), ou lorsque le volume de données de la pluralité de valeurs de tension de sortie stockées dans la deuxième unité de stockage temporaire (42) atteint la capacité de la deuxième unité de stockage temporaire (42).

4. Machine à souder (1000) selon l'une des revendications 1 à 3, comprenant en outre :
une troisième unité de stockage (60) ; et
un affichage (70), dans laquelle
la troisième unité de stockage (60) est configurée pour stocker des données d'affichage associées à l'au moins un parmi le nombre d'occurrences du micro-court-circuit et la valeur moyenne du nombre d'occurrences du micro-court-circuit stockées dans la deuxième unité de stockage (50), et
le processeur de données (90) est configuré pour appeler les données d'affichage à partir de la troisième unité de stockage (60) et amener l'affichage (70) à afficher les données d'affichage.

5. Machine à souder (1100) selon la revendication 4, comprenant en outre :
un robot de soudage (500) auquel l'unité de soudage (300) est fixée ; et
un dispositif de commande de robot (600) configuré pour commander un fonctionnement du robot de soudage (500), dans laquelle le processeur de données (90) est configuré pour associer des informations de commande concernant le robot de soudage (500) aux données d'affichage stockées dans la troisième unité de stockage (60) pour une génération récente d'une autre donnée d'affichage, et amener l'affichage (70) ou un autre affichage (611) prévu dans le dispositif de commande de robot (600) à afficher cette autre donnée d'affichage lorsque le nombre d'occurrences du micro-court-circuit est supérieur ou égal à une valeur prédéterminée.

6. Système de soudage (1200) comprenant :
une pluralité de machines à souder (1000),
chacune de la pluralité de machines à souder (1000) comprenant ;
une unité de soudage (300) ;
une unité d'acquisition de données (20) ; et
une première unité de stockage (40), dans lequel
l'unité d'acquisition de données (20) est configurée pour acquérir séquentiellement une pluralité de valeurs de tension de sortie de l'unité de soudage (300) à une fréquence d'échantillonnage prédéterminée, et
la première unité de stockage (40) est configurée pour stocker la pluralité de valeurs de tension de sortie acquises séquentiellement par l'unité d'acquisition de données (20),
**caractérisé en ce que** chacune de la pluralité de machines à souder (1000) comporte en outre un processeur de données (90) et un affichage (70), et le système de soudage (1200) comporte en outre un dispositif de commande central (700) connecté à la pluralité de machines à souder (1000), dans lequel
le dispositif de commande central (700) comporte une deuxième unité de stockage (720) et une troisième unité de stockage (730),
le processeur de données (90) est configuré pour calculer au moins un parmi un nombre d'occurrences d'un micro-court-circuit entre l'unité de soudage (300) et une pièce à travailler (W) et une valeur moyenne du nombre d'occurrences du micro-court-circuit sur la base de la pluralité de valeurs de tension de sortie stockées dans la première unité de stockage (40), et stocker l'au moins un parmi le nombre d'occurrences du micro-court-circuit calculé et la valeur moyenne calculée du nombre d'occurrences du micro-court-circuit dans la deuxième unité de stockage (720),
la troisième unité de stockage (730) est configurée pour stocker des données d'affichage associées à l'au moins un parmi le nombre d'occurrences du micro-court-circuit et la valeur moyenne du nombre d'occurrences du micro-court-circuit stockées dans la deuxième unité de stockage (720), et
le processeur de données (90) est configuré pour appeler les données d'affichage à partir de la troisième unité de stockage (730) et pour amener l'affichage (70) à afficher les données d'affichage.

7. Système de soudage selon la revendication 6, dans lequel
le dispositif de commande central (700) comporte en outre un autre processeur de données (710), et
cet autre processeur de données (710) est configuré pour appeler les données d'affichage correspondant à un nombre d'occurrences d'un micro-court-circuit ou à une valeur moyenne du nombre d'occurrences du micro-court-circuit à partir de la troisième unité de stockage (730) et amener l'affichage (70) à afficher les données d'affichage lorsque le nombre d'occurrences du micro-court-circuit est supérieur ou égal à une valeur prédéterminée, ou lorsque la valeur moyenne du nombre d'occurrences du micro-court-circuit tend à augmenter dans l'une de la pluralité de machines à souder (1000).

8. Système de soudage (1200) selon la revendication 6, dans lequel
chacune de la pluralité de machines à souder (1000) comporte en outre
un robot de soudage (500) auquel l'unité de soudage (300) est fixée ; et
un dispositif de commande de robot (600) configuré pour commander un fonctionnement du robot de soudage (500),
dans lequel le processeur de données (90) est configuré pour associer des informations de commande concernant le robot de soudage (500) aux données d'affichage stockées dans la troisième unité de stockage (730) pour une génération récente d'une autre donnée d'affichage, et amener l'affichage (70) ou un autre affichage (611) prévu dans le dispositif de commande de robot (600) à afficher cette autre donnée d'affichage lorsque le nombre d'occurrences du micro-court-circuit est supérieur ou égal à une valeur prédéterminée.
